# EUROPÄISCHE PATENTSCHRIFT

(11) **EP 2 082 139 B1**
(45) Veröffentlichungstag und Bekanntmachung des Hinweises auf die Patenterteilung: **29.08.2012**
(21) Anmeldenummer: 07818157.5
(22) Anmeldetag: 14.09.2007
(51) Int. Cl.: F16B 5/00, B23K 26/20, B23K 33/00, B60N 2/22, F16B 5/08, B60N 2/225, B60N 2/68

(54) **KOMPONENTE, INSBESONDERE FÜR EINEN FAHRZEUGSITZ**
COMPONENT, IN PARTICULAR FOR A VEHICLE SEAT
COMPOSANT, NOTAMMENT POUR UN SIÈGE DE VÉHICULE

(30) Priorität: 27.10.2006 DE 102006051403
(43) Veröffentlichungstag der Anmeldung: 29.07.2009
(60) Teilanmeldung: 11007399.6
(73) Patentinhaber: Johnson Controls GmbH, 51399 Burscheid (DE)
(72) Erfinder: KIENKE, Ingo, 42929 Wermelskirchen (DE); OTTO, Jürgen, 51399 Burscheid (DE); BUDWEG, Mario, 42499 Hückeswagen (DE); ALBERT, Kirubaharan Reginold, 51399 Burscheid (DE)
(74) Vertreter: Polypatent
(86) Internationale Anmeldenummer: PCT/EP2007/008005
(87) Internationale Veröffentlichungsnummer: WO 2008/049489

(56) Entgegenhaltungen:
- EP-A- 1 408 242
- WO-A-93/01418
- WO-A-2006/040276
- WO-A-2006/040303
- DE-A1-102005 001 606
- FR-A- 2 712 045

## Beschreibung

### Beschreibung

Die Erfindung betrifft eine Komponente, insbesondere für einen Fahrzeugsitz, mit mindestens drei, vorzugsweise mindestens vier miteinander verbundenen, plattenförmigen Elementen, welche zueinander zumindest näherungsweise parallel ausgerichtet sind, wobei jeweils Elementpaare aus zumindest partiell aneinander liegenden Elementen im Bereich ihrer Anlage unmittelbar miteinander verschweißt sind.

### Stand der Technik

Aus der internationalen Patentanmeldung WO 2006/040276 A1 ist eine erfindungsgemäße Komponente für einen Fahrzeugsitz bekannt. Sie besteht aus einer Schichtung von einander flächig berührenden, etwa gleich dicken Blechplatten, wobei jede Blechplatte mit der unmittelbar darunter liegenden Blechplatte unter Bildung eines Plattenpaares durch Laserschweißung verbunden ist. Während die oberste Blechplatte für den von oben einwirkenden Laserstrahl naturgemäß problemlos zugänglich ist, erfolgt die Verschweißung der tiefer liegenden Plattenpaare jeweils im Bereich von Ausnehmungen in den darüber liegenden Blechplatten, durch welche hindurch der Laserstahl seinen Wirkort erreicht.

Bei kleinteiligen, komplex aufgebauten Komponenten, beispielsweise Lehnenneigungsverstellern von Fahrzeugsitzen, reicht der vorhandene Bauraum zum Einbringen einer Vielzahl derartiger Ausnehmungen gegebenenfalls nicht aus.

Natürlich ist es denkbar, eine geschichtete Komponente auch dadurch zu fertigen, dass zwei Blechplatten aufeinander gelegt und verschweißt werden, nachfolgend eine weitere Blechplatte auf dieses Plattenpaar aufgelegt und mit der darunter liegenden Blechplatte verschweißt wird, und dieser Vorgang bis zum Erreichen der gewünschten Schichtungshöhe wiederholt wird. Im Bereich der Schweißung entsteht jedoch in der Regel ein Schweißwulst, der das Auflegen der nächsten Blechplatte stört und daher zuvor aufwändig entfernt werden muss.

Aus der Patentanmeldung DE 10 2005 001 606 ist bekannt, drei aufeinander liegende Blechplatten unterschiedlicher Dicke in einem Zug mittels Laserschweißung zu verbinden. Dieses Vorgehen erfordert jedoch eine spezielle Reihenfolge der Blechplatten derart, dass der Laserstrahl auf die dünnste Blechplatte auftritt und diese durch die mittlere Blechplatte hindurch mit der dicksten Blechplatte verschweißt. Darüber hinaus ist die Präzision bei beim Verschweißen von zwei Blechplatten wegen des geringeren Wärmeeintrags und entsprechend reduziertem Verzug grundsätzlich besser als beim verbinden von drei Blechplatten mittels einer einzigen Schweißnaht.

In der Druckschrift EP 1 408 242 A1 wird ein Verfahren zum Verbinden von zwei zellularen Sandwichbauelementen beschrieben, die zwischen zwei Oberflächenplatten eine Kemstruktur aufweise, wobei in einem Randbereich eines jeden Sandwichbauelements eine Oberflächenplatte fehlt. Zwei Sandwichbauelemente werden miteinander verbunden, indem im Randbereich der beiden Sandwichbauelemente die eine Kemstruktur des einen Sandwichbauelements mit der anderen, die gleiche Form aufweisende, Kernstruktur des anderen Sandwichbauelements verschweißt werden, nachdem beide Kemstrukturen lückenlos ineinander verzahnt werden. Es werden so Bereiche gebildet, an denen drei unmittelbar übereinanderliegende Bleche miteinander verschweißt werden.

### Aufgabe

Der Erfindung liegt die Aufgabe zugrunde, eine aus plattenförmigen und insbesondere etwa gleich dicken, paarweise durch Schweißnähte verbundenen, Elementen geschichtete Komponente anzubieten, bei welcher die Verbindungen jeweils nicht durch bereits bestehende Schweißnähte gestört werden und zwischen den Elementen der auf der Komponente verfügbare Bauraum möglichst wenig beeinträchtigt wird.

### Lösung

Die Aufgabe wird erfindungsgemäß dadurch gelöst, dass bei einer gattungsgemäßen Komponente jeweils wenigstens ein Element jedes Elementpaares eine einen örtlichen, spaltartigen Abstand (Spaltmaß s) zum anderen Element des gleichen Elementpaares schaffende Kröpfung aufweist und die Verbindung zum nächsten Element unter Bildung eines weiteren Elementpaares im Bereich dieses Abstands erfolgt.

Nach einer besonderen Ausbildung der Erfindung sind die beiden äußeren Elementpaare zueinander spiegelbildlich ausgebildet, wobei die Spiegelebene im Verbindungsbereich des mittleren Elementpaares verläuft. Vorzugsweise ist die Verbindung zwischen den partiell aneinander liegenden Elementen als Laserschweißung ausgebildet.

Die Erfindung ist besonders zur Anwendung in Neigungsverstellern für Fahrzeugsitze, insbesondere in Taumelgetrieben, geeignet, welche ein erstes Beschlagteil und ein gegenüber dem ersten Beschlagteil winkeleinstellbares zweites Beschlagteil aufweisen. Dabei bildet mit Vorteil das mittlere Elementpaar das erste Beschlagteil aus, mit welchem mit Verzahnungen versehene äußere Elemente verbunden sind, wobei die äußeren Elemente als mit Außenverzahnung versehene Zahnräder ausgebildet sind, welche jeweils mit einem mit einer Innenverzahnung versehenen Beschlagplatte des zweiten Beschlagteils in Eingriff bringbar sind. Eine besonders günstige Kraftübertragung kann dabei dadurch erzielt werden, dass die jeweils miteinander in Eingriff befindlichen Zahnräder in Designposition entweder zueinander fluchtend ausgerichtet oder derart versetzt angeordnet sind, dass eine lastbedingte Verformung in Richtung einer definierten Anlage der betreffenden Bauteile erfolgt.

### Figuren

Die Figuren stellen beispielhaft und schematisch verschiedene Ausführungen der Erfindung dar.

Es zeigen:
- Fig. 1: eine Komponente nach einer ersten Ausbildung der Erfindung,
- Fig. 2: ein erstes auszugsweise gezeigtes, erfindungsgemäß gestaltetes Taumelgetriebe,
- Fig. 3: ein auszugsweise dargestelltes Taumelgetriebe nach einer anderen Ausführung der Erfindung.

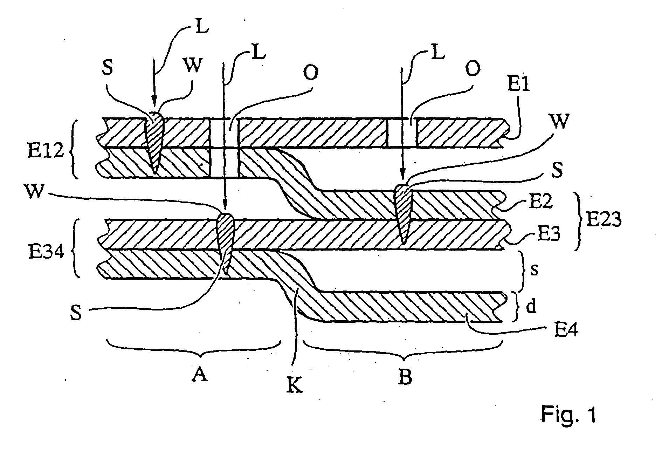

Die in Fig. 1 gezeigte Komponente besteht aus vier plattenförmigen, zueinander im Wesentlichen parallel verlaufenden Elementen E1, E2, E3 und E4 aus Stahlblech, von denen jeweils benachbarte Elemente E1, E2 und E2, E3 sowie E3, E4 insgesamt drei Elementpaare E21, E23 und E34 ausbilden. Die Dicke d ist im Ausführungsbeispiel für alle Elemente E1 bis E4 gleich.

Jedes Elementpaar E12, E23, E34 weist einen ersten Bereich (am Elementpaar E34 mit A bezeichnet) auf, in welchem die betreffenden Elemente (z. B. E3, E4) unmittelbar aneinander anliegen und durch eine Schweißnaht S miteinander verbunden sind. Die Schweißverbindung aller Elementpaare E12, E23, E34 erfolgt mittels Laserstrahl L von einer Seite der Komponente her (in Fig. 1 von ihrer Oberseite), wobei Öffnungen O in den oberen Elementpaaren E12 und E23 den Durchtritt der Laserstrahlen L zu den darunter liegenden Elementpaaren E23 und E34 ermöglichen.

Zumindest ein Element E1 bis E4 jedes Elementpaares E12, E23, E34 ist ferner mit einer Kröpfung (am Elementpaar E34 mit K bezeichnet) versehen, also einem Bereich, in welchem das plattenförmige Element (hier E4) um einen ersten Winkel (im Ausführungsbeispiel 90°) vom benachbarten Element (hier E3) weg gebogen und dann wieder in Gegenrichtung um einen im Wesentlichen gleichen Winkel zurück gebogen wird. Jenseits der Kröpfung K entsteht somit in jedem Elementpaar E12, E23, E34 ein Bereich, in welchem die ein Elementpaar E12, E23, E34 bildenden Elemente E1 und E2, E2 und E3 sowie E3 und E4 zueinander spaltartig beabstandet sind. Am Elementpaar E34 ist dieser Bereich mit B mit dem zugehörigen Spaltmaß s bezeichnet.

Durch diese Ausbildung wird bewirkt, dass die Schweißwülste W der Schweißnähte S eines Elementpaares (z. B. E34) ein benachbartes Elementpaar (hier E23) nicht stören, da sich der betreffende Schweißwulst W in den Spalt im Bereich B hinein entwickelt. Im Ausführungsbeispiel nach Fig. 1 schaffen darüber hinaus bei entsprechend großer Ausbildung auch die Öffnungen O den nötigen Freiraum. Dennoch ist der Spalt hilfreich, Verzug in den oberhalb der Schweißnaht liegenden Elementen zu verhindern. Ferner kann die Dicke des geschweißten Verbundes durch kompensierend ausgeführte Kröpfungen K auch bei Dickentoleranzen der einzelnen Elemente sehr genau eingestellt werden.

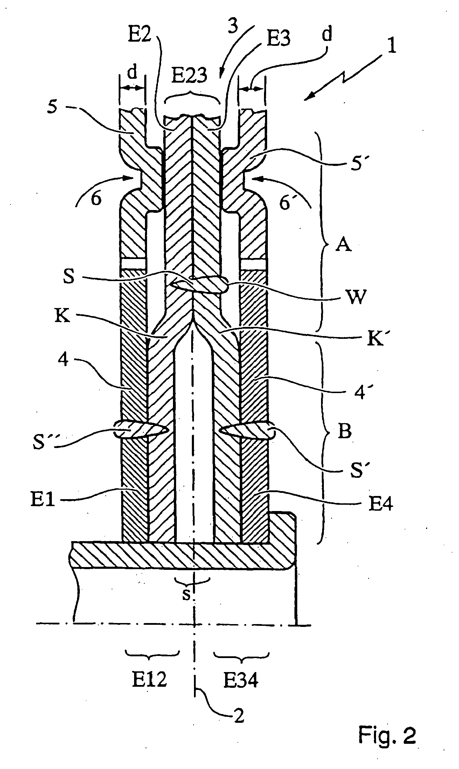

Bei dem in Fig. 2 dargestellten, sehr vereinfacht unter Fortfall zahlreicher Bauteile gezeichneten Taumelgetriebe 1 können Öffnungen O wegen des sehr komplexen Aufbaus nicht vorgesehen werden, so dass dem Bereich B eine besonders wichtige Bedeutung zukommt. Hinsichtlich des Aufbaus und der Funktion derartiger Neigungsversteller wird ausdrücklich auf die Druckschrift WO 2006/040303 A2 verwiesen.

Das zur Verstellung der Lehnenneigung vorgesehene, zu einer Mittelebene 2 näherungsweise spiegelbildlich ausgeführte Taumelgetriebe 1 besteht aus einem ersten Beschlagteil 3, welches beispielsweise starr mit dem Sitzteil des betreffenden Sitzes verbunden ist. Das Beschlagteil 3 umfasst ein mittleres Elementpaar E23, das jeweils einen Bereich A unmittelbarer Anlage aneinander sowie einen Bereich B mit einem Abstand (Spaltmaß s) zueinander aufweist. Zwischen den Bereichen A, B sind beide Elemente E2, E3 des Elementpaares E23 jeweils mit voneinander weg weisenden Kröpfungen K, K' versehen. Die Elemente E2 und E3 sind im Bereich A der unmittelbaren Anlage durch eine Schweißnaht S mit einem Schweißwulst W miteinander verbunden.

Auf das Elementpaar E23 sind von außen unter Ausbildung der Elementpaare E12 und E34 weitere plattenförmigen Elemente E1 und E4 aufgesetzt, welche als außenverzahnte Zahnräder 4, 4' gestalten sind. Die Elementpaare E12 und E34 sind gleichfalls durch Schweißnähte S', S" gefügt.

Bei der Fertigung des Beschlagteils 3 werden zunächst die Elemente E2 und E3 miteinander verschweißt. Anschließend werden die äußeren Elemente E1 und E4 auf diesen Verbund aufgesetzt und mit dem Elementpaar E23 verbunden.

Durch die Kröpfungen K, K' sind die Zahnräder 4, 4' im Bereich der Schweißnaht S des zentralen Elementpaares E23 zu den Elementen E2 und E3 beabstandet, so dass der Schweißwulst W deren Aufsetzen nicht stört und daher nicht zuvor entfernt werden muss.

Die außenverzahnten Zahnräder 4, 4' befinden sich in Eingriff mit Beschlagplatten 5, 5', welche als lehnenfeste Bauteile mit einer Innenverzahnung ausgestattet sind. Die Innenverzahnung weist jeweils zumindest einen Zahn mehr auf als die Außenverzahnung der Zahnräder 4, 4', mit welcher sie sich in Eingriff befindet. Die Zahnräder 4, 4' können sich hierdurch bei einer Betätigung des Taumelgetriebes 1 auf dem Innenumfang der Beschlagplatten 5, 5' abwälzen.

Die Verzahnungen der Zahnräder 4, 4' und der Beschlagplatten 5, 5', welche aus Halbzeugen gleicher Dicke d gestanzt sind, befinden sich dabei bezogen auf ihre Dicke d stets fluchtend in voller Überdeckung, so dass in unbelastetem Zustand der gesamte Materialquerschnitt zur Kraftübertragung genutzt wird. Jenseits der Innenverzahnung an den Beschlagplatten 5, 5' in Richtung des Beschlagteils 3 weisende Vorwölbungen 6, 6' dienen dabei der axialen Führung. Alternativ ist denkbar, Distanzstücke seitlich auf das Beschlagteil 3 aufzusetzen.

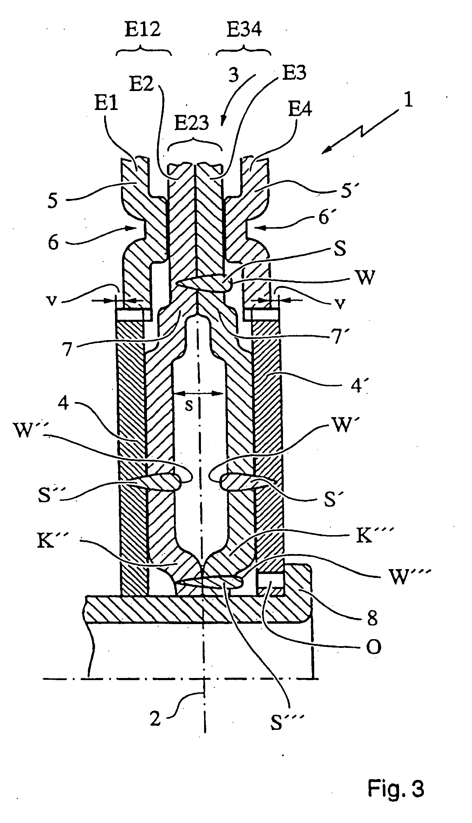

Bei der Ausbildung nach Fig. 3 sind die Beschlagplatten 5, 5' gegenüber den im Ausführungsbeispiel gleich, gegebenenfalls aber auch unterschiedlich dicken Zahnrädern 4, 4' geringfügig, beispielsweise 1/5 bis 1/10 ihrer Dicke d, in Richtung der Mittelebene 2 nach innen versetzt (Versatz v), so dass keine volle Überdeckung im Bereich der Verzahnung gegeben ist. Die Reibungskräfte beim Verstellen des Taumelgetriebes 1 unter normalen Lastverhältnissen werden hierdurch verringert. Bei einer Belastung des Taumelgetriebes 1 führt dieser Versatz v dazu, dass sich die Beschlagplatten 5, 5' mit ihren verzahnten Enden nach innen in Richtung des Beschlagteils 3 verformen, bis sie an den Vorwölbungen 6, 6' und/oder zusätzlichen Abkantungen 7, 7' des Beschlagteils 3 anliegen. Ein unkontrolliertes Auseinanderspreizen der Beschlagplatten 5, 5' wird hierdurch verhindert.

Das Taumelgetriebe nach Fig. 3 wird in einer geänderten Reihenfolge geschweißt. Zunächst erfolgt von den noch getrennten inneren Platten des Beschlagteils 3 (Elemente E2, E3) her deren Verbund mit den Beschlagplatten 5, 5' unter Ausbildung der Elementpaare E12 und E34 (Schweißnähte S' und S"). Anschließend werden die Elementpaare E12 und E34 aufeinander gelegt und außerhalb der Beschlagplatten 5, 5' im Bereich der Elemente E2 und E3 mit der Schweißnaht S verbunden. Die Schweißwülste W' und W" weisen somit in den Abstand s des Beschlagteils 3 hinein. Eine weitere Schweißnaht S"' verbindet die Elemente E2, E3 im Bereich der späteren Anlage an die Lagerhülse 8, wo sie mittels weiterer Kröpfungen K", K"' aneinander liegen. Der Laserstrahl L wird hierzu durch eine kleine Öffnung O in der Beschlagplatte 5' geführt.

Die Beschlagplatte 3 erhält hierdurch eine höhere axiale Steifigkeit und eine verbesserte Anlage an die Lagerhülse 8.

### Bezugszeichen

- d: Dicke
- E1,E2,E3,E4: Elemente
- E12, E23, E34: Elementpaar
- K, K', K", K"': Kröpfung
- L: Laserstrahl
- O: Öffnung
- s: Spaltmaß
- S, S'., S", S"': Schweißnaht
- v: Versatz
- W, W', W", W"': Schweißwulst

- 1: Taumelgetriebe
- 2: Mittelebene
- 3: Beschlagteil
- 4, 4': Zahnrad
- 5, 5': Beschlagplatte
- 6, 6': Vorwölbungen
- 7, 7': Abkantung
- 8: Lagerhülse

## Patentansprüche

1. Komponente, insbesondere für einen Fahrzeugsitz, mit mindestens vier miteinander verbundenen, plattenförmigen Elementen (E1, E2, E3, (E4)), welche zueinander zumindest näherungsweise parallel ausgerichtet sind, wobei jeweils Elementpaare (E12, E23, (E34)) aus zumindest partiell aneinander liegenden Elementen im Bereich ihrer Anlage unmittelbar miteinander verschweißt sind, **dadurch gekennzeichnet, dass** jeweils wenigstens ein Element jedes Elementpaares eine einen örtlichen, spaltartigen Abstand (Spaltmaß s) zum anderen Element des gleichen Elementpaares schaffende Kröpfung (K, K') aufweist und die Verbindung zum nächsten Element unter Bildung eines weiteren Elementpaares im Bereich dieses Abstands erfolgt.

2. Komponente nach Anspruch 1, **dadurch gekennzeichnet, dass** die beiden äußeren Elementpaare (E12, E34) zueinander spiegelbildlich ausgebildet sind und die Spiegelebene (Mittelebene 2) im Verbindungsbereich des mittleren Elementpaares (E23) verläuft.

3. Komponente nach Anspruch 1 oder 2, **dadurch gekennzeichnet, dass** die Verbindung zwischen den partiell aneinander liegenden Elementen (E1 bis E4) als Laserschweißung ausgebildet ist.

4. Komponente nach einem der vorhergehenden Ansprüche, **dadurch gekennzeichnet, dass** die Komponente als Neigungsversteller, insbesondere als Taumelgetriebe (1) ausgebildet ist, welcher ein erstes Beschlagteil (3) und ein gegenüber dem ersten Beschlagteil winkeleinstellbares zweites Beschlagteil aufweist.

5. Komponente nach Anspruch 4, **dadurch gekennzeichnet, dass** das mittlere Elementpaar (E23) das erste Beschlagteil (3) ausbildet, mit welchem mit Verzahnungen versehene äußere Elemente (E1, E4) verbunden sind.

6. Komponente nach Anspruch 5, **dadurch gekennzeichnet, dass** die äußeren Elemente (E1, E4) als mit Außenverzahnung versehene Zahnräder (4, 4') ausgebildet sind, welche jeweils mit einer mit einer Innenverzahnung versehenen Beschlagplatte (5, 5') des zweiten Beschlagteils in Eingriff bringbar sind.

7. Komponente nach Anspruch 6, **dadurch gekennzeichnet, dass** die jeweils miteinander in Eingriff befindlichen Verzahnungen der Zahnräder (4, 4') und Beschlagplatten (5, 5') zueinander fluchtend ausgerichtet sind.

8. Komponente in Form eines Taumelgetriebes (1) nach Anspruch 6, mit mindestens einem außenverzahnten Zahnrad (4, 4') und mindestens einer innenverzahnten Beschlagplatte (5, 5'), **dadurch gekennzeichnet, dass** die jeweils miteinander in Eingriff befindlichen Verzahnungen von Zahnrad (4, 4') und Beschlagplatte (5, 5') zueinander axial versetzt ausgerichtet sind.

9. Taumelgetriebe nach Anspruch 8, **dadurch kennzeichnet, dass** das Taumelgetriebe gegenüber einer Mittelebene (2) im Wesentlichen symmetrisch ausgebildet ist und die Beschlagplatten (5, 5') gegenüber den Zahnrädern (4, 4') um einen Versatz v derart nach innen versetzt angeordnet sind, dass sie bei einer Belastung im Bereich der Verzahnung eine Verformung in Richtung der Mittelebene (2) erfahren.

## Claims

1. Component, particularly for a vehicle seat, having at least four laminar elements (E1, E2, E3, (E4)), which are connected to one another and orientated at least approximately parallel to one another, wherein pairs of elements (E12, E23m (E34)), in each case, consisting of at least partially juxtaposed elements are welded directly to one another in the region of their abutment, **characterised in that** at least one element, in each case, of each pair of elements has a cranked section (K, K') which creates a local, gaplike clearance (gap size s) in relation to the other element belonging to the same pair of elements, and the connection to the next element takes place with the formation of a further pair of elements in the region of the said clearance.

2. Component according to claim 1, **characterised in that** the two outer pairs of elements (E12, E34) are of mirror-image construction in relation to one another, and the mirror plane (median plane 2) extends in the connecting region of the central pair of elements (E23).

3. Component according to claim 1 or 2, **characterised in that** the connection between the partially juxtaposed elements (E1 to E4) is constructed as a laser weld.

4. Component according to one of the preceding claims, **characterised in that** the component is constructed as an inclination-adjuster, in particular as a wobble mechanism (1) which has a first part (3) of the fitting and a second part of the fitting which can be set angularly in relation to said first part of the fitting.

5. Component according to claim 4, **characterised in that** the central pair of elements (E23) forms the first part (3) of the fitting, to which part outer elements (E1, E4) provided with toothing systems are connected.

6. Component according to claim 5, **characterised in that** the outer elements (E1, E4) are constructed as gear wheels (4, 4') which are provided with external toothing and which can each be brought into engagement with a plate (5, 5') of the fitting that belongs to the second part of the fitting and is provided with an internal toothing system.

7. Component according to claim 6, **characterised in that** the toothing systems, which are in engagement with one another in each case, of the gear wheels (4, 4') and plates (5, 5') of the fitting are orientated so as to be in alignment with one another.

8. Component in the form of a wobble mechanism (1) according to claim 6, having at least one externally toothed gear wheel (4, 4') and at least one internally toothed plate (5, 5') of the fitting, **characterised in that** the toothing systems, which are in engagement with one another in each case, of the gear wheel (4, 4') and plate (5, 5') of the fitting are orientated so as to be axially offset in relation to one another.

9. Wobble mechanism according to claim 8, **characterised in that** said wobble mechanism is of essentially symmetrical construction in relation to a median plane (2) and the plates (5, 5') of the fitting are arranged so as to be offset inwards in relation to the gear wheels (4, 4') by an offset v in such a way that they undergo a deformation in the direction of the median plane (2) when a loading occurs in the region of the toothing system.

## Revendications

1. Composant, en particulier pour un siège de véhicule, comprenant au moins quatre éléments (E1, E2, E3, (E4)) en forme de plaques, reliés les uns aux autres, qui sont orientés les uns par rapport aux autres au moins approximativement parallèlement, les paires d'éléments (E12, E23, (E34)) constituées d'éléments disposés au moins partiellement les uns contre les autres étant soudées à chaque fois directement les unes aux autres dans la zone de leur appui, **caractérisé en ce que**, à chaque fois, au moins un élément de chaque paire d'éléments présente un coude (K, K') créant un espace local, ayant une forme de fente (cote de fente s) par rapport à l'autre élément de la même paire d'éléments et la liaison avec le prochain élément s'effectue dans la zone de cet espace en formant une autre paire d'éléments.

2. Composant selon la revendication 1, **caractérisé en ce que** les deux paires d'éléments extérieurs (E12, E34) sont conçus de façon symétrique et le plan de miroir (plan central 2) se situe dans la zone de liaison de la paire centrale d'éléments (E23).

3. Composant selon la revendication 1 ou 2, **caractérisé en ce que** la liaison entre les éléments (E1 à E4) disposés partiellement les uns contre les autres est conçue sous forme de soudage au laser.

4. Composant selon l'une des revendications précédentes, **caractérisé en ce que** le composant est conçu comme dispositif de réglage à inclinaison, en particulier comme mécanisme de basculement (1), qui présente une première partie de ferrure (3), et une seconde partie de ferrure réglable en angle par rapport à la première partie de ferrure.

5. Composant selon la revendication 4, **caractérisé en ce que** la paire centrale d'éléments (E23) forme la première partie de ferrure (3), avec laquelle des éléments (E1, E4) extérieurs dotés de dentures sont reliés.

6. Composant selon la revendication 5, **caractérisé en ce que** les éléments (E1, E4) extérieurs sont conçus sous forme de roues crantées (4, 4') dotées de denture extérieure, lesquelles peuvent être mises en prise à chaque fois avec une plaque de ferrure (5, 5'), dotée d'une denture intérieure, de la seconde partie de ferrure.

7. Composant selon la revendication 6, **caractérisé en ce que** les dentures, se trouvant à chaque fois en prise les unes avec les autres, des roues crantées (4, 4') et les plaques de ferrure (5, 5') sont orientées de façon alignée les unes par rapport aux autres.

8. Composant sous la forme d'un mécanisme de basculement (1) selon la revendication 6, comprenant au moins une roue crantée (4, 4') à denture extérieure et au moins une plaque de ferrure (5, 5') à denture intérieure, **caractérisé en ce que** les dentures, se trouvant à chaque en prise les unes avec les autres, de la roue crantée (4, 4') et de la plaque de ferrure (5, 5') sont orientées avec un décalage axial les unes par rapport aux autres.

9. Mécanisme de basculement selon la revendication 8, **caractérisé en ce que** le mécanisme de basculement est conçu de façon sensiblement symétrique par rapport à un plan médian (2) et les plaques de ferrure (5, 5') sont disposées par rapport aux roues crantées (4, 4') avec un décalage v vers l'intérieur de telle sorte que, dans le cas d'une sollicitation dans la zone de denture, elles subissent une déformation en direction du plan médian (2).
